# EUROPÄISCHE PATENTSCHRIFT

(11) **EP 0 639 415 B1**
(45) Veröffentlichungstag und Bekanntmachung des Hinweises auf die Patenterteilung: **10.11.1999**
(21) Anmeldenummer: 94112600.5
(22) Anmeldetag: 12.08.1994
(51) Int. Cl.: B21D 53/28, F16D 13/62

(54) **Verfahren zum Herstellen eines rotationssymmetrischen Körpers**
Method of making a rotationally symmetrical body
Procédé de fabrication d'un corps à symétrie de rotation

(30) Priorität: 18.08.1993 DE 4327746
(43) Veröffentlichungstag der Anmeldung: 22.02.1995
(73) Patentinhaber: Herzing + Schroth GmbH & Co. KG, D-63179 Obertshausen (DE)
(72) Erfinder: Klein, Erwin, D-63110 Rodgau 2 (DE)
(74) Vertreter: Schieferdecker, Lutz, Dipl.-Ing.

(56) Entgegenhaltungen:
- DE-A- 4 115 366
- DE-C- 4 218 092
- US-A- 4 397 171
- PATENT ABSTRACTS OF JAPAN vol. 14, no. 355 (M-1004) 31. Juli 1990 & JP-A-02 125 110 (YAMAKAWA) 14. Mai 1990
- SHEET METAL INDUSTRIES, Bd.47, Nr.2, Februar 1970, REDHILL GB Seiten 131 - 136 PISTOL 'modern spinning methods'

## Beschreibung

Die Erfindung betrifft ein Verfahren zum Herstellen eines rotationssymmetrischen Körpers durch Umformen einer Platine, wobei der rotationssymmetrische Körper insbesondere zur Verwendung als Lamellenträger für ein Automatikgetriebe bestimmt ist.

Ein Verfahren der hier interessierenden Art ist aus der DE 41 15 366 A1 bekannt. Es dient zur Herstellung einer insbesondere für eine Kupplung oder Bremse bestimmten Trommel, die axiale Führungsnuten und einen inneren Lagerring aufweist. Charakteristisch ist für das bekannte Verfahren, daß zunächst ein Topf aus einem Blech gezogen wird, daß sodann der Topfboden in das Innere des Topfes in Form eines Innentopfes eingestülpt wird, woraufhin der Boden des Innentopfes herausgeschnitten und schließlich die Führungsnuten in den Mantel des Topfes eingedrückt werden. Zur zylinderförmigen Ausbildung des Lagerringes wird ferner der Innentopf mit herausgeschnittenem Boden mit Hilfe eines Durchstellwerkzeuges bearbeitet. Das Einstülpen des Innentopfes erfolgt in drei Arbeitsgängen mit drei formgebenden Stülpwerkzeugen. Schließlich wird noch vor dem Herausschneiden des Bodens des Innentopfes und nach dem Herausstülpen des Innentopfes der ringförmige Bodenflächenrest des Topfes zu einer axial ebenen Fläche gestaucht.

Ein weiteres Verfahren zum Herstellen eines nur auf einem Teil seiner Länge innen verzahnten ring- oder topfförmigen, d.h. kreiszylindrischen Getriebeteiles ist aus der DE 42 18 092 C1 bekannt. Dort wird eine Platine oder Ronde bei einem einzigen Arbeitsgang einer Drückrolle oder von Drückrollen unter Bildung der erwünschten Innenverzahnung umgelegt und anschließend wird ein Restteil der Ronde in demselben Arbeitsgang auf den verbleibenden, unverzahnten Teilbereich des Drückdornes umgelegt und dabei gelängt. Ein mittig angeordneter Kragen entsteht bei diesem Herstellungsverfahren nicht.

Der Erfindung liegt gegenüber dem genannten Stand der Technik die Aufgabe zugrunde, ein sicher beherrschbares, einfaches und zweckmäßiges sowie kostengünstig durchführbares Herstellungsverfahren für den hier interessierenden Lamellenträger anzugeben.

Zur Lösung dieser Aufgabe sieht die Erfindung mit den Merkmalen des kennzeichnenden Teiles des Anspruches 1 vor, daß zunächst zur Herstellung des Kragens eine napfförmige Vertiefung in der Platine hergestellt wird, daß sodann eine Hilfsöffnung in der Vertiefung erzeugt wird, daß die napfförmige Vertiefung daraufhin zu einem zylindrischen Kragen durch Ziehen/Tiefziehen umgeformt wird und sodann der zylindrische Kragen durch Abstrecken auf seine endgültige Länge und seinen endgültigen Querschnitt gebracht wird, woraufhin der Randbereich der Platine koaxial sowie im Abstand zum Kragen zur Herstellung der die Innenverzahnung aufweisenden, außen sowie innen zylindrischen Wand und zur Herstellung eines radial auswärts gerichteten Flansches am freien Rand der zylindrischen Wand durch Fließdrücken umgeformt wird.

Mit Hilfe der besagten Verfahrensschritte läßt sich ein rotationssymmetrischer und eine Innenverzahnung sowie einen radial gerichteten Flansch aufweisender Rohling aus einer Platine in einstückiger Weise unter Einhaltung enger Toleranzen fertigen. Er muß später nur noch an einigen Stellen spanend weiterbearbeitet werden, um schließlich als Lamellenträger für ein Automatikgetriebe dienen zu können. Dabei zeichnet ferner ein hoher Fertigungsgrad mit geringem Ausschuß das besagte Herstellungsverfahren aus. Es ist somit material- und zeitsparend gegenüber bekannten Fertigungsverfahren für derartige, relativ komplizierte Teile. Auch ist bei den bekannten Verfahren der Anteil spanender Fertigung bis zur Erzielung des einbaufertigen Lamellenträgers größer als bei dem erfindungsgemäßen Verfahren.

Weitere Einzelheiten und besondere Ausgestaltungen der Erfindung gehen aus Unteransprüchen in Verbindung mit der Beschreibung und der Zeichnung hervor.

Die Erfindung wird nachstehend anhand von Ausführungsbeispielen, die in der Zeichnung dargestellt sind, näher beschrieben. Dabei zeigen:
- Fig. 1 bis Fig. 6: Schnitte durch die als Ausgangswerkstoff dienende Platine und durch verschiedene Rohlinge entsprechend den jeweiligen Verfahrensschritten bis zur Herstellung des mittig angeordneten Kragens;
- Fig. 7: einen abgebrochenen Schnitt durch den Rohling gemäß Fig. 6 mit einer Durchtrittsöffnung im Kragen;
- Fig. 8 bis Fig. 11: Schnitte durch Rohlinge entsprechend weiteren Verfahrensschritten;
- Fig. 12: einen Schnitt längs der Linie XII-XII durch den Rohling gemäß Fig. 11;
- Fig. 13: einen Schnitt durch den spanend fertig bearbeiteten Lamellenträger;
- Fig. 14: eine Draufsicht auf den Lamellenträger gemäß Fig. 13;
- Fig. 15: einen Schnitt wie in Fig. 13 durch einen abgewandelten Lamellenträger;
- Fig. 16: eine Draufsicht auf den Lamellenträger gemäß Fig. 15;
- Fig. 17: einen Schnitt wie in Fig. 8 durch einen Rohling mit einer durch Tiefziehen hergestellten äußeren Wand;
- Fig. 18: einen Schnitt wie in Fig. 10 durch den Rohling gemäß Fig. 17 nach einem weiteren Verfahrensschritt;
- Fig. 19: eine abgewandelte Einzelheit im Schnitt sowie in größerem Maßstab aus Fig. 13 bzw. Fig. 15 und
- Fig. 20: eine Ansicht der Einzelheit von Fig. 19 in Richtung des Pfeiles X.

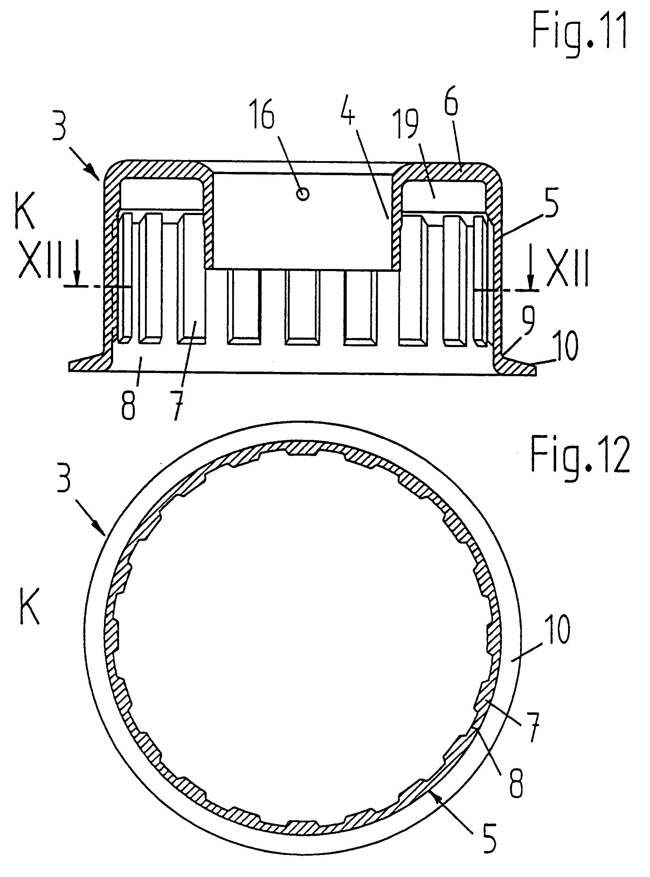

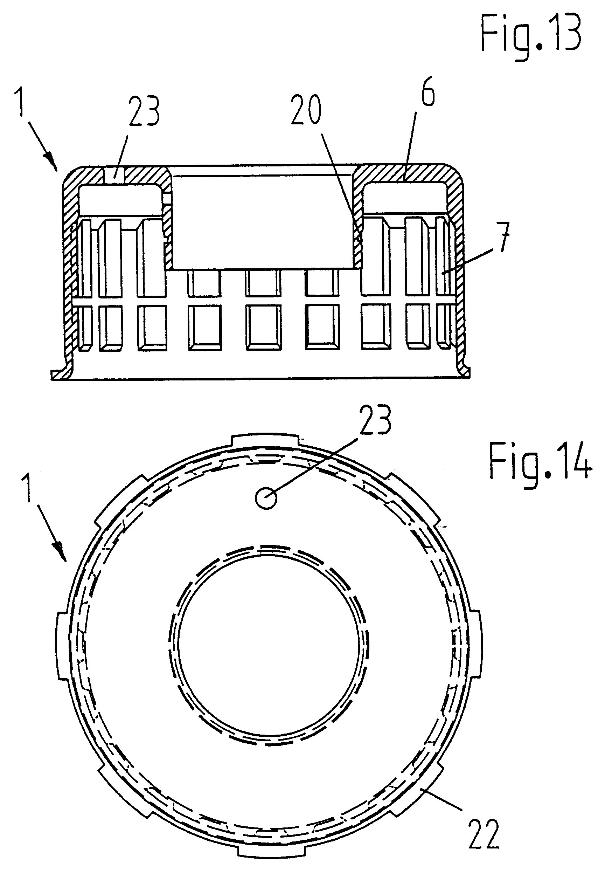

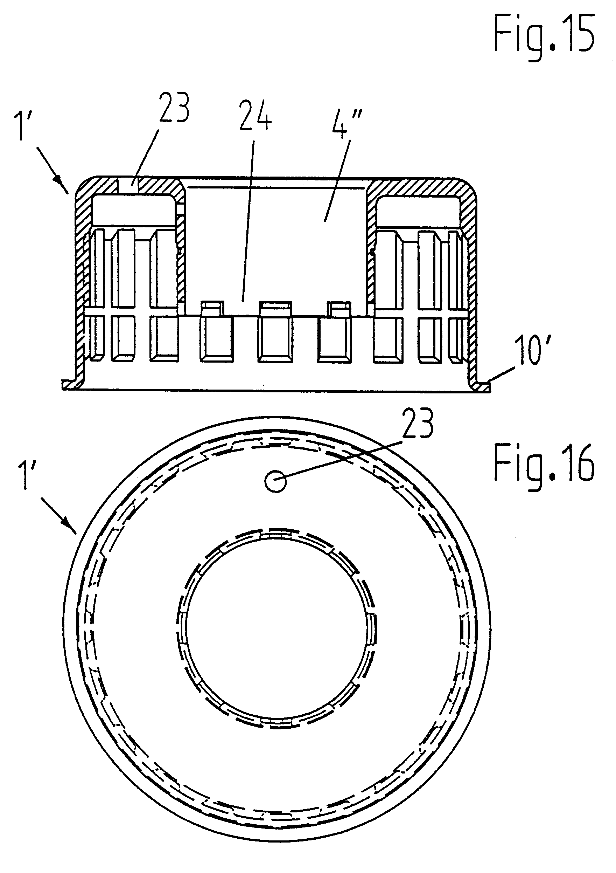

Zur Herstellung eines rotationssymmetrischen Körpers wie insbesondere eines Lamellenträgers 1 gemäß den Fig. 13 und 14 oder eines Lamellenträger 1' gemäß den Fig. 15 und 16 für ein Automatikgetriebe dient als Ausgangswerkstoff eine Platine 2, aus der durch Kaltverformung mittels Vorziehen bzw. Tiefziehen und Abstrecken sowie Fließdrücken ein Rohling 3 gemäß den Fig. 11 und 12 hergestellt wird. Dieser Rohling 3 weist in einstückiger Ausbildung einen mittig angeordneten Kragen 4 und radial außerhalb von dem Kragen 4 und konzentrisch zu dem Kragen 4 eine außen sowie teilweise innen zylindrische Wand 5 sowie einen den Kragen 4 und die Wand 5 verbindenden, ringförmigen Boden 6 und ferner eine Innenverzahnung 7 auf der Innenseite 8 der zylindrischen Wand 5 und schließlich am freien Rand 9 der zylindrischen Wand 5 in ebenfalls einstückiger Weise einen radial auswärts gerichteten Flansch 10 auf (Fig. 11 und 12). Für die Herstellung eines derartigen, rotationssymmetrischen Körpers bzw. Rohlings 3 sind folgende Verfahrensschritte durchzuführen.

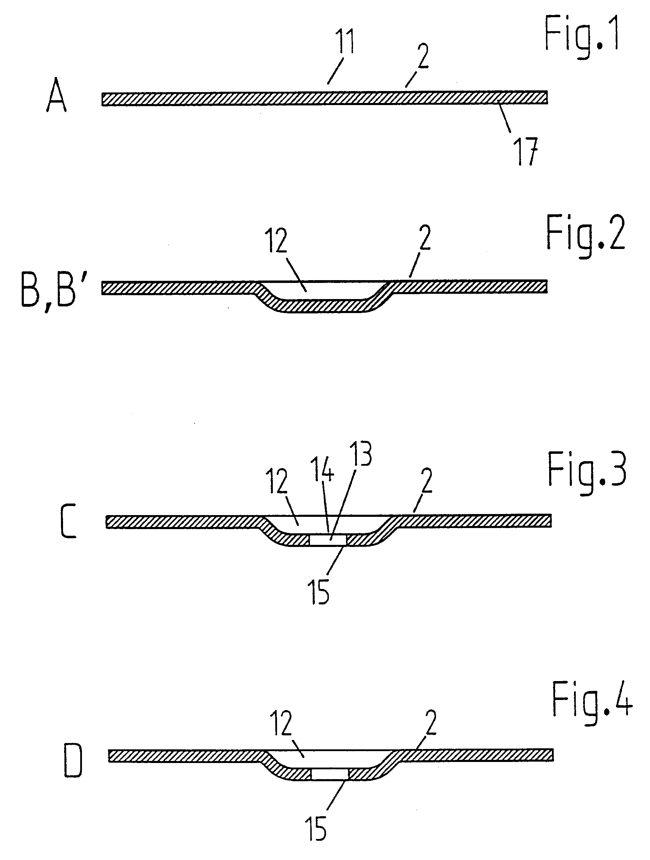

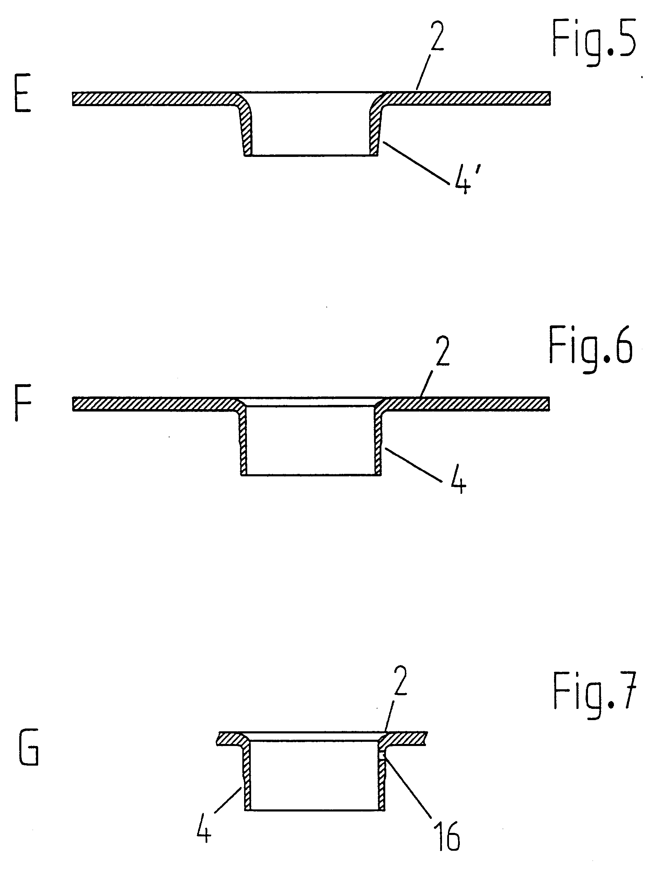

Zunächst wird gemäß Verfahrensschritt A eine Platine 2 (Fig. 1) gefertigt, in deren Zentrum 11 sodann eine napfförmige Vertiefung 12 gemäß Verfahrensschritt B durch Ziehen bzw. Vorziehen erzeugt wird. Daraufhin wird eine Hilfsöffnung 13 in der Mitte 14 der napfförmigen Vertiefung 12 gemäß Verfahrensschritt C hergestellt und der freie Rand 15 der Hilfsöffnung 13 wird gemäß Verfahrensschritt D verdichtet. Sodann wird die napfförmige Vertiefung 12 zu einem zylindrischen Kragen 4' (Fig. 5) durch Ziehen/Tiefziehen gemäß Verfahrensschritt E umgeformt und schließlich wird der zylindrische Kragen 4 (Fig. 6) gemäß Verfahrensschritt F durch Abstrecken auf seine endgültige Länge und auf seinen endgültigen Querschnitt gebracht.

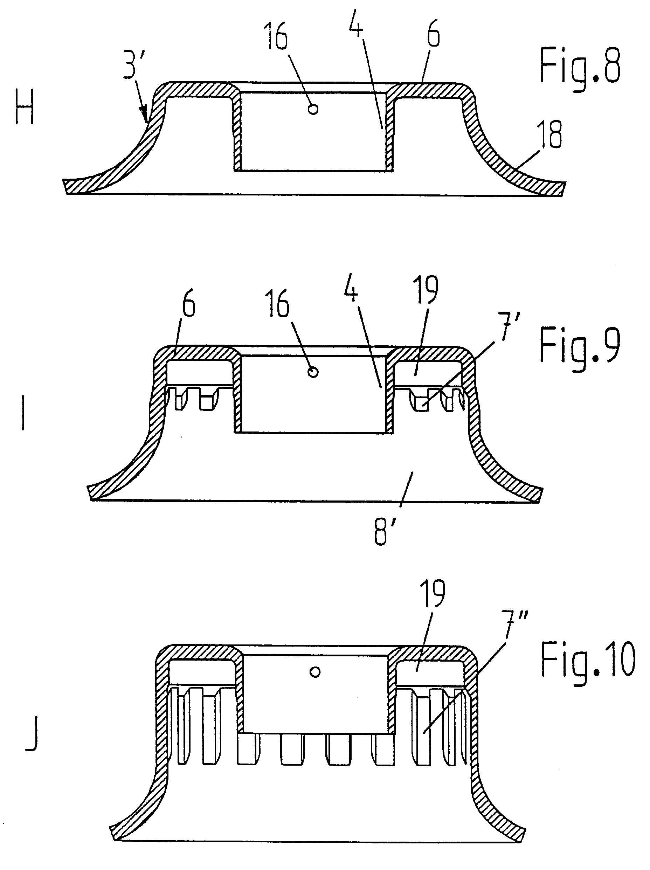

Gemäß dem in den Figuren dargestellten, konkreten Ausführungsbeispiel wird sodann gemäß Verfahrensschritt G (Fig. 7) eine Durchtrittsöffnung 16 in den Kragen 4 z. B. durch Stanzen eingebracht.

Sodann erfolgt eine weitere Umformung im Randbereich 17 der ursprünglichen Platine 2 derart, daß koaxial sowie im Abstand zum Kragen 4 die außen zylindrische Wand 5 mit der Innenverzahnung 7 und dem radial nach außen gerichteten Flansch 10 entsteht. Bei den hierzu erforderlichen Verfahrensschritten H - K handelt es sich bei dem in den Fig. 8 - 12 dargestellten Ausführungsbeispiel um reine Fließdrück-Maßnahmen.

Gemäß Verfahrensschritt H wird der Randbereich 17 der Platine 2 zu einer nach innen gewölbten, glockenartigen Wand 18 (Fig. 8) geformt, die an ihrem einen Ende über den ringförmigen Boden 6 mit dem Kragen 4 verbunden ist. Aus der Platine 2 gemäß Fig. 1 ist bis zum Verfahrensschritt H ein etwa kegelstumpfförmiger Rohling 3' mit einer nach innen gewölbten, glockenartigen Wand 18 und einem mittig angeordneten Kragen 4 geworden (Fig. 8).

Gemäß den weiteren Verfahrensschritten I, J und K wird die zunächst konkav ballige, nach innen gewölbte Wand 18 durch weitere Fließdrück-Schritte in axialer Richtung gestreckt und auf der Innenseite 8' mit einer kurzen, an den Boden 6 anschließenden zylindrischen Fläche 19 sowie mit einer Innenverzahnung 7' gemäß Fig. 9 bzw. 7'' gemäß Fig. 10 und schließlich der vollausgebildeten Innenverzahnung 7 gemäß Fig. 11 versehen. Gleichzeitig formt sich die Wand 18 gemäß Fig. 8 schrittweise in die außen zylindrische Wand 5 mit dem radial nach außen gerichteten Flansch 10 gemäß Fig. 11 um. Mit dem Verfahrensschritt K ist die Innenverzahnung 7 voll ausgebildet und bedarf keiner weiteren Bearbeitung. Gleiches gilt für die zylindrische Fläche 19 auf der Innenseite 8 der außen zylindrischen Wand 5.

Nach der spanlosen Bearbeitung gemäß den Verfahrensschritten A - K wird der Rohling 3 zur Erzielung eines für ein Automatikgetriebe verwendbaren Lamellenträgers 1 spanend weiterbearbeitet, wozu z. B. gemäß den Fig. 13 und 14 eine Ringnut 20 außen im Kragen 4, ferner eine sich durch die Innenverzahnung 7 erstreckende Ringnut 21 und zahnartige Vorsprünge 22 (Fig. 14) im Bereich des ursprünglich erzeugten Flansches 10 hergestellt werden. Ferner erhält der Boden 6 eine Durchtrittsöffnung 23, die grundsätzlich auch spanlos erzeugt werden kann. Die Durchtrittsöffnung 23 dient zur Aufnahme eines in den Figuren nicht dargestellten Ventils.

Einzelheiten der spanenden Bearbeitung interessieren grundsätzlich nicht.

In den Fig. 15 und 16 ist ein gegenüber dem zuerst beschriebenen Ausführungsbeispiel etwas abgewandelter Lamellenträger 1' dargestellt. Wesentliche Unterschiede bestehen bei der axialen Länge des Kragens 4'' gegenüber der axialen Länge des Kragens 4 beim Lamellenträger 1. Der Kragen 4'' ist deutlich länger.

Um eine etwas größere Länge für den Kragen 4'' zu erreichen, wird beim Vorziehen der napfförmigen Vertiefung 12 mehr Material aus dem Bereich des Bodens 6 zum Zentrum 11 transportiert und die napfförmige Vertiefung 12 wird dazu etwas anders als in Fig. 2 dargestellt dimensioniert und in mehreren Schritten B,B'' usw durch Vorziehen erzeugt.

Ferner weist der Kragen 4'' an seinem freien Ende eine Kronenverzahnung 24 auf und anstelle der zahnartigen Vorsprünge 22 ist ein genau dimensionierter, ebenfalls durch spanende Bearbeitung erzeugter Flansch 10' vorgesehen.

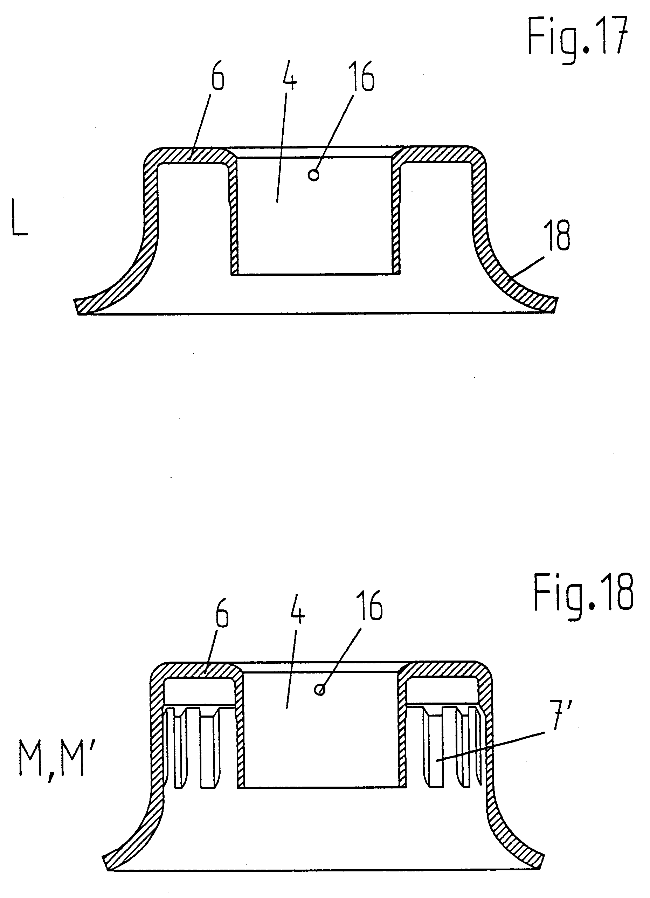

Die beiden Fig. 17 und 18 betreffen Verfahrensschritte L und M zur Herstellung der außen zylindrischen Wand 5 mit der Innenverzahnung 7 und dem Flansch 10. Die Verfahrensschritte L und M stellen gegenüber den Verfahrensschritten H - J (Fig. 8 - 10) abgewandelte Schritte insofern dar, als gemäß Verfahrensschritt L zunächst der Randbereich 17 der Platine durch Tiefziehen zu einer glockenartigen Wand 18 geformt wird. Daraufhin werden die außen zylindrische Wand 5 und die Innenverzahnung 7 bzw. der Flansch 10 in weiteren Fließdrück-Schritten M, M' usw. (Fig. 18) hergestellt, wie dies auch bei dem zuerst beschriebenen Ausführungsbeispiel der Fall ist.

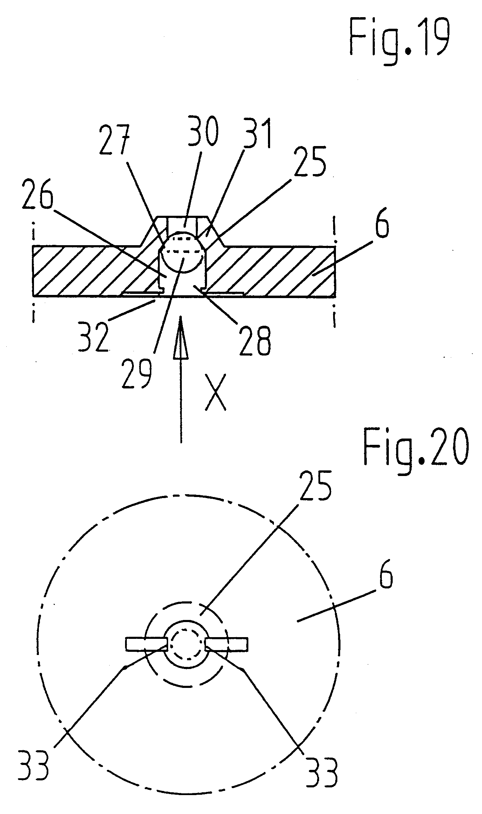

Die beiden Fig. 19 und 20 betreffen schließlich noch ein in dem Boden 6 des Lamellenträgers 1 bzw. 1' angeordnetes Ventil 25. Dieses Ventil 25 ist in den Boden 6 weitgehend einstückig integriert und tritt an die Stelle des mit der Durchtrittsöffnung 23 (Fig. 13 - 16) verwendbaren Ventiles.

Das Ventil 25 umfaßt eine Durchtrittsöffnung 26 mit einem innen befindlichen Absatz 27, der vorzugsweise kegelstumpfförmig ist. Die Durchtrittsöffnung 26 bildet ferner eine zur Aufnahme eines Ventilverschlußkörpers 29 dienende Ventilkammer 28 und eine Austrittsöffnung 30. Der lichte Querschnitt der Ventilkammer 28 ist an den Querschnitt des Ventilverschlußkörpers 29 angepaßt, der zweckmäßigerweise eine Ventilkugel ist. Der lichte Querschnitt der Austrittsöffnung 30 ist geringer und befindet sich innerhalb einer vorsich innerhalb einer vorzugsweise kegelstumpfförmigen Erhebung 31, die durch Materialverlagerung bei der spanlosen, durch Kaltverformung erfolgenden Herstellung der Durchtrittsöffnung 26 entsteht.

Nach dem Einlegen des Ventilkörpers 29 in die Durchtrittsöffnung 26 wird deren lichter Querschnitt im Bereich des eintrittsseitigen, freien Randes 32 (Fig. 19) geringfügig durch Kaltverformung verengt. Der Ventilverschlußkörper 29 kann daraufhin nicht mehr aus der Durchtrittsöffnung 26 bzw. Ventilkammer 28 austreten.

Die zusätzliche Anordnung einer Ventilfeder in der Ventilkammer 28 ist möglich. Sie ist aber nicht in allen Fällen zwingend notwendig.

Die Verengung der Ventilkammer 28 im Bereich des freien Randes 32 erfolgt z. B. mit Hilfe zweier Lappen 33, die aus dem Werkstoff des Bodens 6 durch Materialverlagerung/Verstemmen erzeugt werden. Diese den Ventilverschlußkörper 29 in der Ventilkammer 28 haltenden Lappen 33 versperren die Durchtrittsöffnung 26 nur geringfügig und sichern dennoch den Verschlußkörper 29 in ausreichendem Maße.

Es versteht sich schließlich, daß auch mannigfache Abwandlungen der im Anspruch 1 definierten Erfindung denkbar sind.

## Patentansprüche

1. Verfahren zum Herstellen eines rotationssymmetrischen Körpers, insbesondere eines Lamellenträgers (1, 1') für ein Automatikgetriebe durch Umformen einer Platine (2), dadurch gekennzeichnet, daß
a) zunächst zur Herstellung eines Kragens (4) eine napfförmige Vertiefung (12) in der Platine (2) hergestellt wird,
b) daß sodann eine Hilfsöffnung (13) in der Vertiefung (12) erzeugt wird,
c) daß die napfförmige Vertiefung (12) sodann zu einem zylindrischen Kragen (4') durch Ziehen/Tiefziehen umgeformt und
d) daß sodann der zylindrische Kragen (4) durch Abstrecken auf seine endgültige Länge und seinen endgültigen Querschnitt gebracht wird,
e) daß daraufhin der Randbereich (17) der Platine (2) koaxial sowie im Abstand zum Kragen (4) zur Herstellung einer eine Innenverzahnung (7) aufweisenden, außen sowie teilweise innen zylindrischen Wand (5) und
f) zur Herstellung eines radial auswärts gerichteten Flansches (10) am freien Rand (9) der zylindrischen Wand (5) durch Fließdrücken umgeformt wird.

2. Verfahren nach Anspruch 1, dadurch gekennzeichnet, daß die Hilfsöffnung (13) in der Vertiefung (12) durch Stanzen hergestellt wird.

3. Verfahren nach mindestens einem der vorhergehenden Ansprüche, dadurch gekennzeichnet, daß die außen zylindrische Wand (5) zunächst durch Tiefziehen teilweise hergestellt wird, woraufhin die Wand (5), die Innenverzahnung (7) und der radial gerichtete Flansch (10) durch Fließdrücken geformt werden.

4. Verfahren nach mindestens einem der vorhergehenden Ansprüche, dadurch gekennzeichnet, daß die außen zylindrische Wand (5) mit der Innenverzahnung (7) und mit dem radial gerichteten Flansch (10) schrittweise durch Fließdrücken hergestellt wird.

5. Verfahren nach mindestens einem der vorhergehenden Ansprüche, dadurch gekennzeichnet, daß zur Herstellung der außen zylindrischen sowie einen Flansch (10) aufweisenden Wand (5) zunächst ein Rohling (3') als Zwischenprodukt eine nach innen gewölbte, glockenartige Wand (18) erhält.

6. Verfahren nach mindestens einem der vorhergehenden Ansprüche, dadurch gekennzeichnet, daß durch Stanzen eine radial gerichtete Durchtrittsöffnung (16) in dem Kragen (4) vor der Herstellung der außen zylindrischen Wand (5) erzeugt wird.

7. Verfahren nach mindestens einem der vorhergehenden Ansprüche, dadurch gekennzeichnet, daß der als Lamellenträger (1, 1') dienende und eine außen zylindrische Wand (5) mit einem radial gerichteten Flansch (10), einen ringförmigen Boden (6) und einen mittig angeordneten Kragen (4) aufweisende Rohling (3) spanend fertig bearbeitet wird.

8. Verfahren nach mindestens einem der vorhergehenden Ansprüche, dadurch gekennzeichnet, daß die durch Stanzen hergestellte Hilfsöffnung (13) längs ihres freien Randes verdichtet wird, ehe eine weitere Umformung des Randbereiches erfolgt.

9. Verfahren nach mindestens einem der vorhergehenden Ansprüche, dadurch gekennzeichnet, daß zur Erzielung eines Kragens (4'') mit größerer Länge zunächst Material aus dem Bereich des Bodens (6) zum Zentrum (11) der Platine (2) verlagert wird, ehe die napfförmige Vertiefung (12) in mehreren Schritten durch Vorziehen erzeugt wird.

10. Verfahren nach mindestens einem der vorhergehenden Ansprüche, dadurch gekennzeichnet, daß eine einen Absatz (27) aufweisende Durchtrittsöffnung (26) im Boden (6) durch spanlose Kaltumformung hergestellt wird und daß die Durchtrittsöffnung (26) eine Ventilkammer (28) mit größerem lichten Querschnitt zur Aufnahme eines Ventilverschlußkörpers (29) erhält und daß ein freier Rand (32) der Ventilkammer (28) nach Einlegen des Ventilverschlußkörpers (29) in die Ventilkammer (28) durch Kaltumformung verengt wird.

11. Verfahren nach Anspruch 10, dadurch gekennzeichnet, daß den Ventilverschlußkörper (29) haltende, durch Materialverlagerung erzeugte Lappen (33) am Boden (6) spanlos nach dem Einlegen des Ventilverschlußkörpers (29) geformt werden.

## Claims

1. A process for producing a rotationally symmetrical body, in particular a plate carrier (1, 1') for an automatic transmission, by shaping a plate blank portion (2), characterised in that
a) firstly to produce a collar (4) a cup-shaped depression (12) is produced in the plate blank portion (2),
b) an auxiliary opening (13) is then produced in the depression (12),
c) the cup-shaped depression (12) is then shaped to form a cylindrical collar (4') by drawing/deep-drawing.
d) then the cylindrical collar (4) is brought to its definitive length and its definitive cross-section by stretching down.
e) thereupon the edge region (17) of the plate blank portion (2) is shaped by flow-pressing coaxially and at a spacing relative to the collar (4) to produce an externally and partially internally cylindrical wall (5) having an internal tooth arrangement (7) and
f) to produce a radially outwardly directed flange (10) at the free edge (9) of the cylindrical wall (5).

2. A process according to claim 1 characterised in that the auxiliary opening (13) in the depression (12) is produced by stamping.

3. A process according to at least one of the preceding claims characterised in that the externally cylindrical wall (5) is initially partially produced by deep drawing, whereupon the wall (5), the internal tooth arrangement (7) and the radially directed flange (10) are shaped by flow-pressing.

4. A process according to at least one of the preceding claims characterised in that the externally cylindrical wall (5) with the internal tooth arrangement (7) and with the radially directed flange (10) is produced stepwise by flow-pressing.

5. A process according to at least one of the preceding claims characterised in that to produce the externally cylindrical wall (5) having a flange (10) firstly a blank (3') as an intermediate product receives an inwardly curved, bell-like wall (18).

6. A process according to at least one of the preceding claims characterised in that a radially directed through opening (16) is produced in the collar (4) by stamping prior to production of the externally cylindrical wall (5).

7. A process according to at least one of the preceding claims characterised in that the blank (3) which serves as the plate carrier (1, 1') and which has an externally cylindrical wall (5) with a radially directed flange (10), an annular end portion (6) and a centrally arranged collar (4) is subjected to cutting finishing machining.

8. A process according to at least one of the preceding claims characterised in that the auxiliary opening (13) produced by stamping is compressed along its free edge before further shaping of the edge region is effected.

9. A process according to at least one of the preceding claims characterised in that to produce a collar (4'') of greater length firstly material is displaced out of the region of the end portion (6) to the centre (11) of the plate blank portion (2) before the cup-shaped depression (12) is produced in a plurality of steps by pre-drawing.

10. A process according to at least one of the preceding claims characterised in that a through opening (26) having a step (27) is produced in the end portion (6) by non-cutting cold shaping and that the through opening (26) receives a valve chamber (28) of larger internal cross-section for accommodating a valve closure body (29) and that a free edge (32) of the valve chamber (28) is constricted by cold shaping after insertion of the valve closure body (29) into the valve chamber (28).

11. A process according to claim 10 characterised in that lugs (33) which hold the valve closure body (29) and which are produced by displacement of material are formed on the end portion (6) by a non-cutting procedure after insertion of the valve closure body (29).

## Revendications

1. Procédé de fabrication d'un corps à symétrie de rotation, notamment d'un support de lamelles (1, 1') pour une transmission automatique par déformation d'une platine (2), caractérisé en ce qu'il est
a) réalisé d'abord pour la fabrication d'un col (4) un creux en forme de pot (12) dans la platine (2),
b) produit ensuite une ouverture auxiliaire (13) dans le creux (12),
c) que le creux (12) en forme de pot est déformée ensuite en un col cylindrique (4') par emboutissage-emboutissage profond et
d) qu'ensuite le col cylindrique (4) est amené par étirage à sa longueur définitive et sa section transversale définitive,
e) qu'ensuite la zone de bord (17) de la platine (2) est déformée coaxialement et à une certaine distance du col (4) pour réaliser une paroi (5) présentant une denture intérieure (7), cylindrique à l'extérieur ainsi que partiellement à l'intérieur et est déformée,
f) pour la réalisation d'une bride (10) orientée radialement vers l'extérieur au bord libre (9), de la paroi cylindrique (5) par un emboutissage au tour.

2. Procédé selon la revendication 1, caractérisé en ce que l'ouverture auxiliaire (13) dans le creux (12) est réalisée par découpage.

3. Procédé selon au moins l'une des revendications précédentes, caractérisé en ce que la paroi (5) cylindrique à l'extérieur est réalisé d'abord partiellement par emboutissage profond, à la suite de quoi la paroi (5), la denture intérieure (7) et la bride (10) orientée radialement sont formées par emboutissage au tour.

4. Procédé selon au moins l'une des revendications précédentes, caractérisé en ce que la paroi (5) cylindrique à l'extérieur est réalisée avec la denture intérieure (7) et avec la bride (10) orientée radialement pas-à-pas par emboutissage au tour.

5. Procédé selon au moins l'une des revendications précédentes, caractérisé en ce que pour la réalisation de la paroi (5), cylindrique à l'extérieur et présentant une bride (10), il est conféré d'abord à une ébauche (3'), en tant que produit intermédiaire, une paroi en forme de cloche (18) bombée vers l'intérieur.

6. Procédé selon au moins l'une des revendications précédentes, caractérisé en ce qu'il est produit par découpage une ouverture traversante (16) orientée radialement dans le col (4), avant la réalisation de la paroi (5) cylindrique à l'extérieur.

7. Procédé selon au moins l'une des revendications précédentes, caractérisé en ce que l'ébauche (3) servant de support de lamelles (1, 1') et présentant une paroi (5) cylindrique à l'extérieur avec une bride (10) orientée radialement, un fond annulaire (6) et un col (4) disposé au milieu est soumise à une finition par enlèvement des copeaux.

8. Procédé selon au moins l'une des revendications précédentes, caractérisé en ce que l'ouverture auxiliaire (13) réalisée par découpage est compactée le long de son bord libre avant de procéder à une déformation ultérieure de la zone de bord.

9. Procédé selon au moins l'une des revendications précédentes, caractérisé en ce que, pour l'obtention d'un col (4'') d'une plus grande longueur, d'abord du matériau est déplacé de la zone du fond (6) vers le centre (11) de la platine (2) avant que le creux en forme de pot 12) soit produit en plusieurs étapes par étirage préalable.

10. Procédé selon au moins l'une des revendications précédentes, caractérisé en ce qu'une ouverture traversante (26) présentant un gradin (27) dans le fond (6) est réalisée par une déformation à froid sans enlèvement de copeau, et que l'ouverture traversante (26) reçoit une chambre de vanne (28) d'une plus grande section transversale intérieure pour loger un corps de fermeture de vanne (29), et qu'un bord libre (32) de la chambre de vanne (28), après la mise en place du corps de fermeture (29) dans la chambre de vanne (28), est rétréci par déformation à froid.

11. Procédé selon la revendication 10, caractérisé en ce que des languettes (33) au fond (6), retenant le corps de fermeture de vanne (29), produites par déplacement de matériaux, sont formées sans enlèvement de copeaux, après la mise en place du corps de fermeture de vanne (29).
